# EUROPÄISCHE PATENTSCHRIFT

(11) **EP 2 362 508 B1**
(45) Veröffentlichungstag und Bekanntmachung des Hinweises auf die Patenterteilung: **03.02.2016**
(21) Anmeldenummer: 10001148.5
(22) Anmeldetag: 04.02.2010
(51) Int. Cl.: H02G 15/013, H01R 43/00

(54) **Verfahren zum ummanteln eines elektrischen Leiters mit einem elastischen Dichtungselement**
Method for sheathing an electrical wire with an elastic sealing element
Procédé d'enrobage d'un conducteur électrique doté d'un élément d'étanchéification élastique

(43) Veröffentlichungstag der Anmeldung: 31.08.2011
(73) Patentinhaber: Delphi Technologies, Inc., Troy MI 48007 (US)
(72) Erfinder: Urbaniak, Andreas, 48153 Münster (DE); Maron, Rudolf, 42897 Remscheid (DE)
(74) Vertreter: Delphi France SAS

(56) Entgegenhaltungen:
- FR-A1- 2 436 319
- JP-A- 5 299 149

## Beschreibung

Die vorliegende Erfindung betrifft ein Verfahren zum Ummanteln eines elektrischen Leiters mit einem elastischen Dichtungselement gemäß dem Oberbegriff des Anspruchs 1, wie es beispielsweise aus der FR 2 436 319 A1 bekannt geworden ist, sowie einen mit einem elastischen Dichtungselement ummantelten elektrischen Leiter.

In der Kraftfahrzeugindustrie werden kontinuierlich Anstrengungen unternommen, um das Fahrzeuggewicht zugunsten der Kraftstoffwirtschaftlichkeit zu reduzieren. Da in Kraftfahrzeugen üblicherweise nicht unerhebliche Mengen an elektrischen Leitern sowie an aus elektrischen Leitern zusammengesetzten Kabelsätzen verlegt sind, ist die Kraftfahrzeugindustrie auch um eine Gewichtsreduzierung der Kabelsätze bemüht, weshalb die Kupferquerschnitte der Leiter bis auf Werte zwischen ca. 0,13 mm² und ca. 0,08 mm² verkleinert werden, so dass der Durchmesser an der Außenfläche der Isolierung dieser elektrischen Leiter mit reduzierter Querschnittsfläche nur noch etwa 0,8 mm beträgt.

Dies erweist sich jedoch dahingehend als problematisch, dass sich derartige elektrische Leiter mit reduziertem Außendurchmesser nicht mehr in herkömmlicher Art und Weise mit einem elastischen Dichtungselement ummanteln lassen, welches während seiner Herstellung mittels eines Spritzgießverfahrens bereits mit einer Durchdringung zur Aufnahme eines elektrischen Leiters hergestellt wurde, wie es in der JP 05-299 149 A beschrieben wird. So ist nämlich mit einem Innendurchmesser von etwa 0,65 bis 0,8 mm die Fertigungsgrenze von derartigen ein Dichtungselement durchsetzenden Durchdringungen erreicht, was zur Folge hat, dass die Kontraktions- bzw. Kompressionskraft, die von dem Dichtungselement auf ein in ihre Durchdringung eingeführten elektrischen Leiter ausgeübt wird, nicht immer ausreicht, um einen hinreichend dichten Abschluss zu gewährleisten.

Der Erfindung liegt daher die Aufgabe zugrunde, ein Verfahren zum Ummanteln eines elektrischen Leiters mit einem elastischen Dichtungselement anzugeben, mit dem ein hinreichend dichter Abschluss zwischen dem elektrischen Leiter und dem Dichtungselement auch bei sehr dünnen elektrischen Leitern gewährleistet werden kann.

Diese Aufgabe wird erfindungsgemäß mit dem Verfahren gemäß Anspruch 1 zum Ummanteln eines elektrischen Leiters mit einem elastischen Dichtungselement gelöst.

Gemäß einer Ausführungsform erfolgt die Lösung der Aufgabe dadurch, dass in dem Dichtungselement zunächst eine Durchdringung mit einem ersten Äquivalentdurchmesser erzeugt wird, welche sich im Wesentlichen linear durch das Dichtungselement hindurch erstreckt. Bei dieser Durchdringung handelt es sich um einen räumlichen Schnitt oder eine Penetration, dessen bzw. deren Äquivalentdurchmesser vorzugsweise kleiner als 0,1 mm ist. Die auf diese Weise mit einem ersten Äquivalentdurchmesser erzeugte Durchdringung wird dann elastisch auf einen zweiten Äquivalentdurchmesser aufgeweitet bzw. gedehnt, welcher geringfügig größer als der jeweilige elektrische Leiter ist, den es mit dem elastischen Dichtungselement zu ummanteln gilt. So sollte der zweite Äquivalentdurchmesser beispielsweise in der Größenordnung von ca. 1 mm oder mehr liegen, wenn der elektrische Leiter einen Außendurchmesser von 0,8 mm aufweist.

Nachdem auf diese Weise die Durchdringung auf den zweiten Äquivalentdurchmesser aufgeweitet wurde, kann anschließend ein elektrischer Leiter in die auf den zweiten Äquivalentdurchmesser aufgeweitete Durchdringung eingeführt werden, so dass sich der elektrische Leiter vollständig durch das Dichtungselement hindurch erstreckt. Um nun einen hinreichend dichten Abschluss zwischen dem elektrischen Leiter und dem Dichtungselement zu erzeugen, wird anschließend bewirkt, dass sich die auf den zweiten Äquivalentdurchmesser aufgeweitete Durchdringung zusammenzieht bzw. kontrahiert, wodurch ein dichter Abschluss zwischen dem elektrischen Leiters und dem elastischen Dichtungselement sichergestellt werden kann.

Da sich die Durchdringungen in dem Dichtungselement nicht immer kreisrund herstellen lassen, wird hier als Vergleichsgröße nicht der Durchmesser sondern der Äquivalentdurchmesser verwendet; er entspricht dabei dem Durchmesser einer kreisrunden Durchdringung, deren Innenumfang dem Innenumfang der jeweils betrachteten Durchdringung entspricht. Ebenfalls kann als Vergleichsgröße die Querschnittsfläche herangezogen werden, so dass der Äquivalentdurchmesser dem Durchmesser einer kreisrunden Durchdringung entspricht, deren Querschnittsfläche der Querschnittsfläche der jeweils betrachteten Durchdringung entspricht.

Die Durchdringung ersten Äquivalentdurchmessers kann in dem Dichtungselement beispielsweise erzeugt werden, indem dasselbe mit einem Flüssigkeits- oder Gasstrahl bzw. allgemein mit einem Düsenstrahl beaufschlagt wird, der die gewünschte Durchdringung in das Dichtungselement mit einem ersten Äquivalentdurchmesser schneidet. Die so erzeugte Durchdringung kann dann beispielsweise mechanisch oder thermisch beispielsweise durch Wärmebeaufschlagung des Dichtungselements auf den zweiten Äquivalentdurchmesser aufgeweitet werden, so dass nach Einführen eines elektrischen Leiters in die so aufgeweitete Durchdringung beispielsweise durch Abkühlen des elastischen Dichtungselements bewirkt werden kann, dass sich dieses bzw. die aufgeweitete Durchdringung in der gewünschten Weise zusammenzieht.

Zwar kann das erfindungsgemäße Verfahren in der zuvor erläuterten Weise unter Verwendung eines Düsenstrahls sowie mechanischer und/oder thermischer Einwirkung auf das elastische Dichtungselement durchgeführt werden; vorteilhafte Ausführungsformen des erfindungsgemäßen Verfahrens ergeben sich jedoch aus der folgenden Beschreibung, den Zeichnungen und insbesondere aus den Unteransprüchen.

So ist gemäß einer Ausführungsform vorgesehen, dass die Durchdringung ersten Äquivalentdurchmessers in dem Dichtungselement erzeugt wird, indem dieses mit einem spitzen, dünnen und vorzugsweise runden Gegenstand wie beispielsweise einer Stechnadel durchstoßen wird, deren Schaftdurchmesser dem ersten Äquivalentdurchmesser entspricht. Die auf diese Weise erzeugte Durchdringungen ersten Äquivalentdurchmessers kann dann beispielsweise in der zuvor erläuterten Art und Weise durch mechanische und/oder thermische Einwirkung auf das elastische Dichtungselement auf den zweiten Äquivalentdurchmesser aufgeweitet werden.

Gemäß einer weiteren Ausführungsform ist es vorgesehen, die mit Hilfe eines Düsenstrahls oder einer Stechnadel erzeugte Durchdringung ersten Äquivalentdurchmessers auf den zweiten Äquivalentdurchmesser aufzuweiten, indem eine Hohlnadel durch die mit dem ersten Äquivalentdurchmesser erzeugte Durchdringung hindurchgeführt wird, deren Schaftdurchmesser dem zweiten Äquivalentdurchmesser entspricht. Das Aufweiten der Durchdringung ersten Äquivalentdurchmessers auf den zweiten Äquivalentdurchmesser mit Hilfe einer Hohlnadel erweist sich dabei dahingehend als vorteilhaft, dass dadurch das Einführen des elektrischen Leiters in die Durchdringung erleichtert wird, indem diese in die Hohlnadel selbst eingeschoben wird.

Nach einer weiteren Ausführungsform kann vorgesehen werden, den elektrischen Leiter in die auf den zweiten Äquivalentdurchmesser aufgeweitete Durchdringung einzuführen, indem der elektrische Leiter in die Hohlnadel eingeführt wird und danach die Hohlnadel aus dem Dichtungselement herausgezogen wird, so dass der elektrische Leiter in der sich aufgrund der Elastizität des Dichtungselements dann von selbst kontrahierenden Durchdringung verbleibt. Dadurch, dass die Durchdringung ersten Äquivalentdurchmessers mit einem Äquivalentdurchmesser erzeugt wurde, der kleiner als der Außendurchmesser der elektrischen Leitung ist, kann somit ein dichter Abschluss zwischen dem elektrischen Leiter und dem elastischen Dichtungselement sichergestellt werden. Aufgrund der Elastizität des Werkstoffs, aus dem das Dichtungselement hergestellt ist, besitzt nämlich die Durchdringung die Tendenz, sich nach dem Entfernen der Hohlnadel wieder zusammenzuziehen, wodurch auf den elektrischen Leiter eine Kompressionskraft ausgeübt wird, durch die nicht nur ein dichter Abschluss gegenüber dem Dichtungselement erzeugt sondern der elektrische Leiter auch reibschlüssig in dem Dichtungselement gehalten wird. Mit anderen Worten wird also durch das Herausziehen der Hohlnadel aus dem Dichtungselement in der gewünschten Weise das Kontrahieren der auf den zweiten Äquivalentdurchmesser aufgeweiteten Durchdringung bewirkt, um den elektrischen Leiter gegenüber dem elastischen Dichtungselement abzudichten.

Um zu verhindern, dass durch die scharfe Vorderkante an der Spitze der Hohlnadel Material am Innenumfang der Durchdringung abgetragen wird, wenn die Hohlnadel in die Durchdringung ersten Äquivalentdurchmessers eingeführt wird, ist es gemäß einer weiteren Ausführungsform vorgesehen, die Hohlnadel durch die mit dem ersten Äquivalentdurchmesser erzeugte Durchdringung hindurchzuführen, indem die Hohlnadel auf die in dem Dichtungskörper noch befindliche Stechnadel aufgefädelt und darauf aufgeschoben wird. Die Durchdringung ersten Durchmessers hat somit nicht die Möglichkeit, sich vor dem Einführen der Hohlnadel in den Dichtungskörper auf einen Durchmesser zusammenzuziehen, der kleiner als der erste Äquivalentdurchmesser ist, wodurch beim Einführen der Hohlnadel in die Durchdringung insbesondere dann kein Material vom Innenumfang der Durchdringung abgetragen wird, wenn der Innendurchmesser der Hohlnadel im Wesentlichen dem Außendurchmesser der Stechnadel entspricht.

Zwar kann der elektrische Leiter in die Hohlnadel eingeführt werden, nachdem die Stechnadel aus der Hohlnadel gezogen wurde. Da der elektrische Leiter aufgrund seines sehr kleinen Durchmessers jedoch eine gewisse Knickgefährdung aufweist, kann es sich als vorteilhaft erweisen, den elektrischen Leiter schon in die Hohlnadel einzuführen, während die Stechnadel aus der Hohlnadel gezogen wird. So kann nämlich beispielsweise der elektrische Leiter an der Spitze der durch den Dichtungskörper hindurch gestochenen Stechnadel befestigt werden, so dass der elektrische Leiter dadurch in die Hohlnadel eingezogen wird, dass die Stechnadel aus der Hohlnadel gezogen wird. Der elektrische Leiter wird somit in derselben Richtung in die Hohlnadel eingeführt, in der die Stechnadel aus der Hohlnadel gezogen wird.

In fertigungstechnischer Hinsicht kann es sich jedoch ebenfalls als vorteilhaft erweisen, den elektrischen Leiter in derselben Richtung in die Hohlnadel einzuführen, in der die Stechnadel in die Hohlnadel eingeführt wird. In diesem Falle sind nämlich etwaige Apparaturen und Einführhilfen zum Einführen des elektrischen Leiters und der Stechnadel in die Hohlnadel nur auf einer Seite des Dichtungselements vorzusehen, wodurch diesen Apparaturen und Einführhilfen eine Doppelfunktion zugewiesen werden kann.

Wie bereits zuvor angedeutet wurde, sollte das Erzeugen der Durchdringung ersten Äquivalentdurchmessers und/oder das Aufweiten der mit einem ersten Äquivalentdurchmesser erzeugten Durchdringung auf einen zweiten Äquivalentdurchmesser nicht-spanend bzw. zerspanungsfrei erfolgen, damit ein möglichst dichter Abschluss zwischen dem elektrischem Leiter und dem Dichtungselement infolge des Kontrahierens der Durchdringung nach erfolgtem Entfernen der Hohlnadel aus dem Dichtungselement sichergestellt werden kann. Würde hingegen beim Erzeugen oder Aufweiten der Durchdringung Material entlang des Innenumfangs der Durchdringung entfernt werden, so bestünde die Gefahr, dass an der Stelle des Materialabtrags nach dem Herausziehen der Hohlnadel aus dem Dichtungselement ein klaffender Spalt zwischen dem Dichtungselement und dem elektrischen Leiter verbleibt, so dass dort kein dichter Abschluss gewährleistet ist.

Obwohl das Erzeugen der Durchdringung ersten Äquivalentdurchmessers und das Aufweiten derselben auf einen zweiten Äquivalentdurchmesser in der zuvor beschriebenen Art und Weise in zwei aufeinander folgenden Schritten erfolgen kann, kann es sich in fertigungstechnischer Hinsicht als vorteilhaft erweisen, diese beiden Schritte unmittelbar im Anschluss aneinander bzw. mit fließendem Übergang ineinander durchzuführen, indem die Stechnadel zusammen mit der auf sie aufgeschobenen Hohlnadel in das Dichtungselement gestochen wird. Insbesondere dann, wenn sich dabei die Spitze der Hohlnadel kontinuierlich in der Spitze der Stechnadel fortsetzt, weist die Durchdringung während ihres Aufweitens bis auf den zweiten Äquivalentdurchmesser nur für eine sehr kurze Zeitdauer den ersten Äquivalentdurchmesser auf, so dass auch bei dieser Ausführungsform - wenn auch nur für eine sehr kurze Zeitdauer - zunächst eine Durchdringung ersten Äquivalentdurchmessers erzeugt wird, welche dann sofort weiter aufgeweitet wird.

Um kein bzw. möglichst wenig Material beim Einführen der Hohlnadel in die Durchdringung ersten Äquivalentdurchmessers vom Innenumfang der Durchdringung abzutragen, ist die Hohlnadel gemäß einer noch weiteren Ausführungsform mit einer kegelstumpfförmigen Spitze ausgebildet, welche sich von einem dem zweiten Äquivalentdurchmesser entsprechenden Durchmesser am Nadelschaft zu einem dem ersten Äquivalentdurchmesser entsprechenden Durchmesser an der Nadelspitze verjüngt. Die Hohlnadel liegt somit mit ihrer Nadelspitze beim Aufschieben auf die Stechnadel dicht an derselben an, wodurch kein oder zumindest annähernd kein Material entlang dem Innenumfang der Durchdringung ersten Äquivalentdurchmessers abgetragen wird, wenn die Hohlnadel in die Durchdringung hinein geschoben wird.

Im Folgenden wird die Erfindung nun rein exemplarisch anhand einer beispielhaften Ausführungsform unter Bezugnahme auf die beigefügten Zeichnungen beschrieben, wobei:
- Fig. 1: eine perspektivische Ansicht eines beispielhaften elastischen Dichtungselements ist;
- Fig. 2 bis 7: den Verfahrensablauf einer beispielhaften Ausführungsform eines Verfahrens zum Ummanteln eines elektrischen Leiters mit einem elastischen Dichtungselements veranschaulichen; und
- Fig. 8: eine perspektivische Darstellung einer auf eine Stechnadel aufgeschobenen Hohlnadel zeigt.

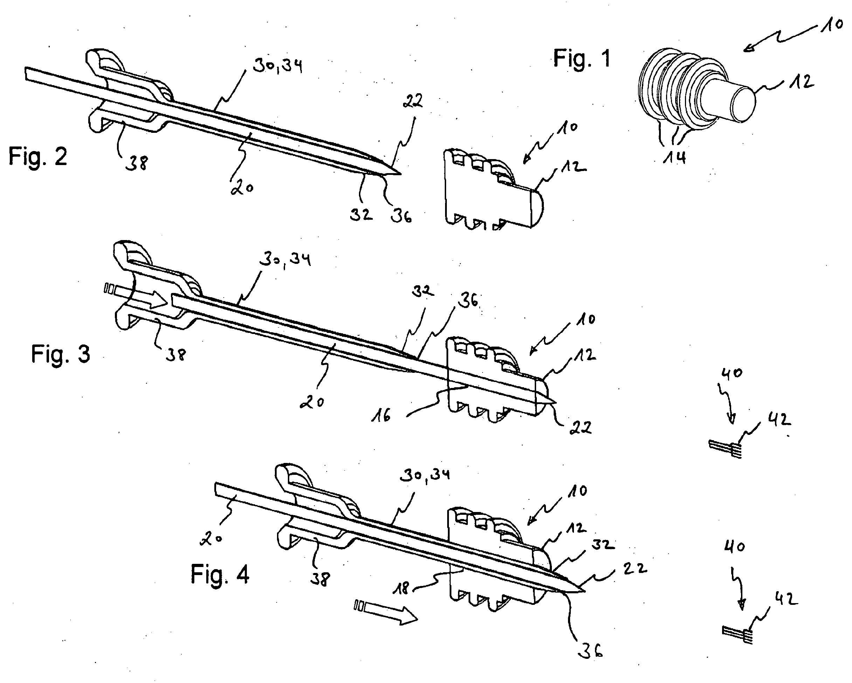

Die Fig. 1 zeigt ein elastisches Dichtungselement 10 in perspektivischer Darstellung, welches beispielsweise mit Hilfe eines Spritzgießverfahrens als Vollkörper aus beispielsweise einem Silikonmaterial hergestellt wurde. Das Dichtungselement 10 weist dabei einen im Wesentlichen zylindrischen Hauptkörper 12 auf, welcher in axialer Richtung von drei zueinander beabstandeten Dichtringen 14, welche einstückig mit dem Hauptkörper 12 ausgebildet sind, umgeben ist.

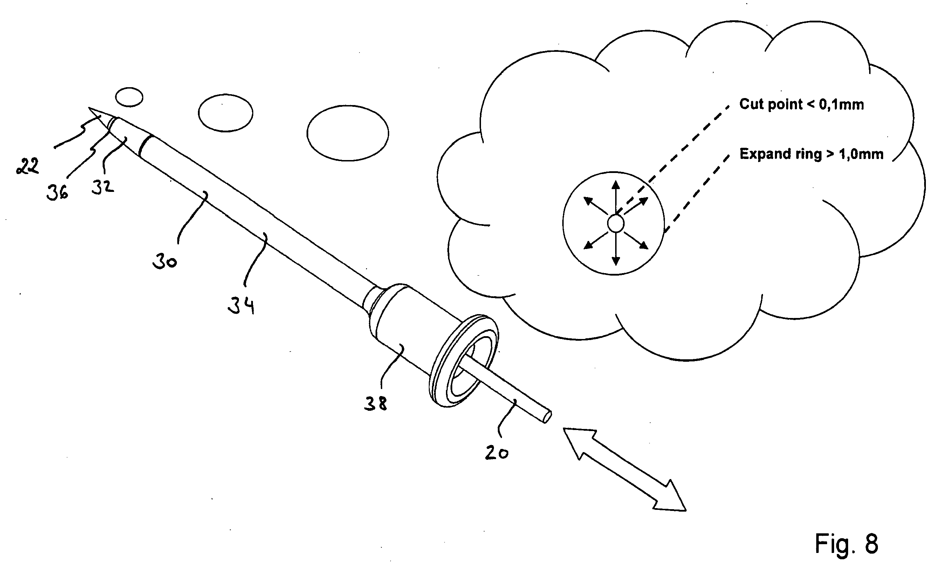

Die Fig. 2 zeigt den Ausgangszustand des erfindungsgemäßen Verfahrens, bevor die Stechnadel 20 und die Hohlnadel 30 in axialer Richtung in den Hauptkörper 12 des Dichtungselements 10 eingestochen und durch diesen hindurch geschoben werden. Wie der Schnittdarstellung der Fig. 2 entnommen werden kann, in der die Hohlnadel 30 auf die Stechnadel 20 aufgeschoben worden ist, weist die Hohlnadel 30 eine kegelstumpfförmige Spitze 32 auf, welche sich vom Nadelschaft 34, dessen Durchmesser dem in dem Dichtungselement 10 herzustellenden zweiten Äquivalentdurchmesser in der Größenordnung von etwa 1 mm entspricht (siehe Fig. 8: "Expand ring"), zu ihrer Nadelspitze am Stirnende 36 der Spitze 32 bis auf einen dem in dem Dichtungselement 10 herzustellenden ersten Äquivalentdurchmesser in der Größenordnung von etwa 0,1 mm verjüngt (siehe Fig. 8: "Cut point").

In den Darstellungen der Fig. 2 und 8 kann erkannt werden, dass sich die Spitze 32 der Hohlnadel 30 kontinuierlich in der Spitze 22 der in der Hohlnadel 30 verschieblich angeordneten Stechnadel 20 fortsetzt, was bedeutet, dass der Außendurchmesser der Stechnadel 20 im Wesentlichen dem Innendurchmesser der Hohlnadel 30 bzw. dem Durchmesser der Hohlnadel 30 an ihrem Stirnende 36 entspricht. An ihrem ihrer kegelstumpfförmigen Spitze 32 gegenüberliegenden Ende weist die Hohlnadel 30 einen Einführtrichter 38 auf, welcher dazu dient, das Einführen der Stechnadel 20 in die Hohlnadel 30 und gegebenenfalls auch das Einführen eines elektrischen Leiters in die Hohnadel 30 zu erleichtern.

Im Folgenden wird nun im Wesentlichen unter Bezugnahme auf die Fig. 3 bis 7 eine Ausführungsform des erfindungsgemäßen Verfahrens erläutert. Nachdem die beiden gemäß Fig. 2 ineinander geschobenen Nadeln 20, 30 in der dargestellten Art und Weise axial versetzt zu dem Dichtungselement angeordnet wurden, wird in einem ersten Schritt damit begonnen, in dem Dichtungselement 10 eine Durchdringung mit einem ersten Äquivalentdurchmesser zu erzeugen, indem die Stechnadel 20 mit ihrer Spitze 22 voraus in den Hauptkörper 22 des Dichtungselements 10 gestochen und durch diesen hindurch geschoben wird, wie dies aus dem Übergang von der Fig. 2 zur Fig. 3 erkennbar wird (siehe auch Fig. 8: "Cut point").

Nachdem auf diese Weise in dem Dichtungselement 12 eine Durchdringung 16 ersten Äquivalentdurchmessers erzeugt wurde, wird dann in einem weiteren Schritt die Durchdringung 16 ersten Äquivalentdurchmessers auf einen zweiten Äquivalentdurchmesser aufgeweitet (siehe Fig. 8: "Expand ring"), indem die Hohlnadel 30 mit ihrer Spitze 32 voraus auf der Stechnadel 20 durch den Hauptkörper 12 des Dichtungselements 10 hindurch geschoben und somit durch die zuvor erzeugte Durchdringung 16 ersten Äquivalentdurchmessers hindurch geschoben wird, wie dies anschaulich in der Fig. 4 dargestellt ist.

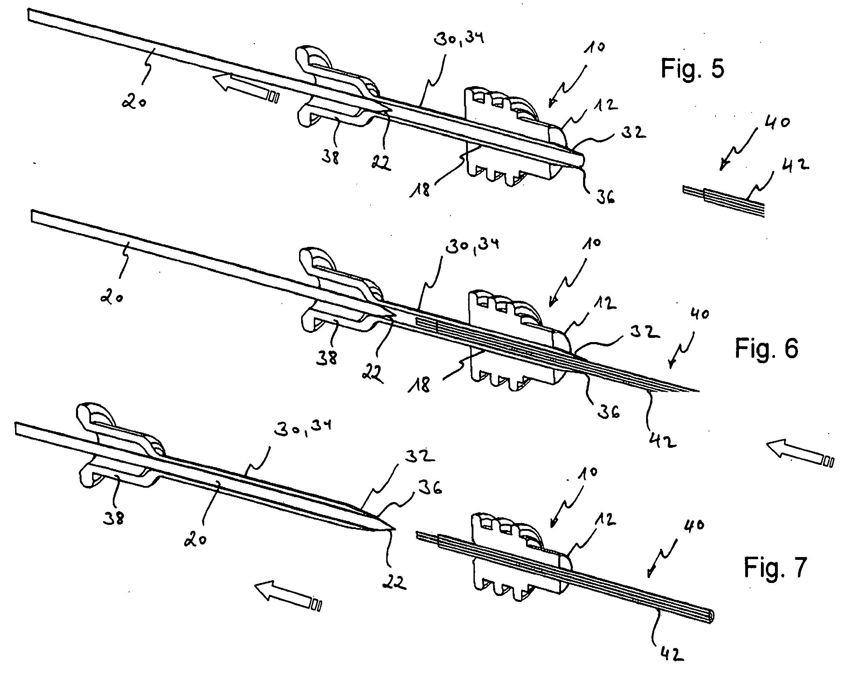

Nachdem auf diese Weise in dem Hauptkörper 12 des Dichtungselements 10 eine Durchdringung 18 zweiten Äquivalentdurchmessers von etwa 1 mm erzeugt wurde, wird dann die Stechnadel 20 gemäß Fig. 5 wieder zurück gezogen, um im Inneren der Hohlnadel 30 Platz zur Aufnahme eines mit einer Isolierung 42 umgebenen elektrischen Leiters 40 zu schaffen, welcher sich in der Fig. 5 in axialer Beabstandung zur Spitze 32 der noch in dem Dichtungselement 10 befindlichen Hohlnadel 30 befindet und einen Außendurchmesser von etwa 0,8 mm aufweist.

In einem weiteren Verfahrensschritt kann somit nun der elektrische Leiter 40 in die auf den zweiten Äquivalentdurchmesser aufgeweitete Durchdringung 18 bzw. in das Innere der Hohlnadel 30 eingeführt werden. Alternativ zu der in den Figuren dargestellten Ausführungsform kann jedoch der elektrische Leiter 42 auch gleichzeitig mit dem Zurückziehen der Stechnader 20 aus der Hohlnadel 30 in das Innere derselben eingeführt werden. Hierzu könnte beispielsweise das vordere Ende des elektrischen Leiters 40 an der Spitze 22 der Stechnadel 20 oder an dem der Spitze 22 der Stechnadel 20 gegenüberliegenden Ende der Stechnadel 20 befestigt werden, um den elektrischen Leiter 40 mit Hilfe der Stechnadel 20 in das Innere der Hohlnadel 30 einzuziehen, indem die Stechnadel 20 aus der Hohlnadel 30 gezogen wird.

Nachdem der elektrische Leiter 40 auf eine der zuvor erläuterten Arten in das Innere der Hohlnadel 30 eingebracht wurde, wird dann die Hohlnadel 30 aus dem Dichtungselement 10 herausgezogen, so dass allein der elektrische Leiter 40 in dem Dichtungselement 10 verbleibt, wie dies in der Fig. 7 dargestellt ist. Durch das Herausziehen der Hohlnadel 30 aus dem Dichtungselement 10 wird dabei bewirkt bzw. zugelassen, dass sich das Dichtungselement 10 als Ganzes bzw. die zuvor auf den zweiten Äquivalentdurchmesser aufgeweitete Durchdringung 18 auf annähernd ihren ersten Äquivalentdurchmesser in der Größenordnung von 0,1 mm zusammenziehen kann, so dass nicht nur ein dichter Abschluss zwischen dem elektrischen Leiter 40 und dem Dichtungselement 10 sondern auch eine reibschlüssige Verbindung zwischen dem elektrischen Leiter 40 und dem Dichtungselement 10 sichergestellt werden kann, durch die das Dichtungselement 10 sicher auf dem elektrischen Leiter 40 gehalten wird.

Sofern in der voranstehenden Beschreibung davon die Rede ist, dass ein Element aus dem anderen Element herausgezogen wird, so bedeutet dies, dass das eine Element vollständig aus dem anderen Element entfernt wird, wie dies auf die Hohlnadel 30 zutrifft, welche gemäß Fig. 7 vollständig aus dem Dichtungselement 10 herausgezogen wird.

Demgegenüber bedeutet die Formulierung, der zufolge ein Element aus dem anderen Element gezogen wird, nicht zwangsweise, dass das eine Element vollständig aus dem anderen Element herausgezogen wird, wie dies auf die Stechnadel 20 zutrifft, welche gemäß der Fig. 5 lediglich teilweise aus der Hohlnadel 30 gezogen wurde.

### Bezugszeichenliste

- 10: Dichtungselement
- 12: Hauptkörper von 10
- 14: Dichtungsringe um 12
- 16: Durchdringung ersten Äquivalentdurchmessers
- 18: Durchdringung zweiten Äquivalentdurchmessers

- 20: Stechnadel, Durchmesser bspw. ca. 0,1 mm
- 22: Spitze von 20

- 30: Hohlnadel
- 32: Spitze von 30
- 34: Nadelschaft von 30, Durchmesser bspw. ca. 1 mm
- 36: Stirnende von 32, Durchmesser bspw. ca. 0,1 mm
- 38: Einführtrichter

- 40: elektrischer Leiter
- 42: Isolierung von 40, Außendurchmesser bspw. ca. 0,8 mm

## Patentansprüche

1. Verfahren zum Ummanteln eines elektrischen Leiters (40) mit einem elastischen Dichtungselement (10), mit den Schritten:
- Bereitstellen eines Dichtungselementes (10); und
- Erzeugen einer Durchdringung (16) in dem Dichtungselement (10);
**gekennzeichnet durch**
- Aufweiten der erzeugten Durchdringung (16);
- Einführen des elektrischen Leiters (40) in die aufgeweitete Durchdringung (18); und
- Erwirken eines Kontrahierens der aufgeweiteten Durchdringung (18) zur Abdichtung des elektrischen Leiters (40) gegenüber dem elastischen Dichtungselement (10).

2. Verfahren nach Anspruch 1,
**dadurch gekennzeichnet, dass**
die Durchdringung (16) in dem Dichtungselement (10) mit einem ernsten Äquivalentdurchmesser erzeugt wird und die so erzeugte Durchdringung auf einen zweiten Äquivalentdurchmesser (18) aufgeweitet wird.

3. Verfahren nach Anspruch 2,
**dadurch gekennzeichnet,**
**dass** die Durchdringung (16) ersten Äquivalentdurchmessers erzeugt wird, indem das Dichtungselement (10) mit einer Stechnadel (20) durchstoßen wird; und/oder
**dass** die Durchdringung (16) ersten Äquivalentdurchmessers auf den zweiten Äquivalentdurchmesser aufgeweitet wird, indem eine Hohlnadel (30) durch die mit dem ersten Äquivalentdurchmesser erzeugte Durchdringung (16) hindurchgeführt wird.

4. Verfahren nach Anspruch 3,
**dadurch gekennzeichnet, dass**
der elektrische Leiter (40) in die auf den zweiten Äquivalentdurchmesser aufgeweitete Durchdringung (18) eingeführt wird, indem der elektrische Leiter (40) in die Hohlnadel (30) eingeführt wird und danach die Hohlnadel (30) aus dem Dichtungselement (10) herausgezogen wird, so dass der elektrische Leiter (40) in der sich aufgrund der Elastizität des Dichtungselements (10) dann von selbst kontrahierenden Durchdringung verbleibt.

5. Verfahren nach Anspruch 3 oder 4,
**dadurch gekennzeichnet, dass**
das Kontrahieren der auf den zweiten Äquivalentdurchmesser aufgeweiteten Durchdringung (18) erwirkt wird, indem die Hohlnadel (30) aus dem Dichtungselement (10) herausgezogen wird.

6. Verfahren nach zumindest einem der Ansprüche 3 bis 5,
**dadurch gekennzeichnet, dass**
die Hohlnadel (30) durch die mit einem ersten Äquivalentdurchmesser erzeugte Durchdringung (16) hindurchgeführt wird, indem die Hohlnadel (30) auf die in dem Dichtungskörper (10) befindliche Stechnadel (20) aufgeschoben wird.

7. Verfahren nach Anspruch 6,
**dadurch gekennzeichnet, dass**
die Stechnadel (20) aus der Hohlnadel (30) gezogen wird, nachdem die Hohlnadel (30) auf die in dem Dichtungskörper (10) befindliche Stechnadel (20) aufgeschoben wurde.

8. Verfahren nach zumindest einem der Ansprüche 4 bis 7,
**dadurch gekennzeichnet, dass**
der elektrische Leiter (40) in die Hohlnadel (30) eingeführt wird, entweder nachdem die Stechnadel (20) aus der Hohlnadel (30) gezogen wurde oder während die Stechnadel (20) aus der Hohlnadel (30) gezogen wird.

9. Verfahren nach Anspruch 7 oder 8,
**dadurch gekennzeichnet, dass**
der elektrische Leiter (40) in derselben Richtung in die Hohlnadel (30) eingeführt wird, in der die Stechnadel (20) aus der Hohlnadel (30) gezogen wird.

10. Verfahren nach Anspruch 7 oder 8,
**dadurch gekennzeichnet, dass**
der elektrische Leiter (40) in derselben Richtung in die Hohlnadel (30) eingeführt wird, in der die Stechnadel (20) in die Hohlnadel (30) eingeführt wird.

11. Verfahren nach zumindest einem der vorstehenden Ansprüche,
**dadurch gekennzeichnet, dass**
das Erzeugen der Durchdringung (16) nicht-spanend erfolgt und/oder dass das Aufweiten der erzeugten Durchdringung (16) nicht-spanend erfolgt.

12. Verfahren nach zumindest einem der Ansprüche 3 bis 11,
**dadurch gekennzeichnet, dass**
das Erzeugen der Durchdringung (16) ersten Äquivalentdurchmessers und das Aufweiten der mit einem ersten Äquivalentdurchmesser erzeugten Durchdringung (16) auf einen zweiten Äquivalentdurchmesser in einem gemeinsamen Schritt erfolgt, indem die Stechnadel (20) zusammen mit der auf sie aufgeschobenen Hohlnadel (30) in das Dichtungselement (10) gestochen wird.

13. Verfahren nach zumindest einem der Ansprüche 3 bis 12,
**dadurch gekennzeichnet, dass**
die Hohlnadel (30) eine kegelstumpfförmige Spitze (32) aufweist, welche sich von einem dem zweiten Äquivalentdurchmesser entsprechenden Durchmesser (16) am Nadelschaft (34) zu einem dem ersten Äquivalentdurchmesser entsprechenden Durchmesser (16) an der Nadelspitze verjüngt.

14. Verfahren nach zumindest einem der Ansprüche 2 bis 13,
**dadurch gekennzeichnet, dass**
der erste Äquivalentdurchmesser kleiner als der Außendurchmesser der elektrischen Leitung (40) und der zweite Äquivalentdurchmesser größer als der Außendurchmesser der elektrischen Leitung (40) gewählt wird.

15. Mit einem elektrischen Dichtungselement ummantelter elektrischer Leiter mit einem Durchmesser von vorzugsweise höchstens 1 mm, erhältlich nach einem Verfahren gemäß zumindest einem der voranstehenden Ansprüche.

## Claims

1. Method for covering an electrical conductor (40) with an elastic sealing element (10), comprising the steps of:
- providing a sealing element (10); and
- generating a through-opening (16) in the sealing element (10); **characterized by**
- expanding the generated through-opening (16);
- inserting the electrical conductor (40) into the expanded through-opening (18); and
- effecting a contraction of the expanded through-opening (18) for sealing the electrical conductor (40) against the elastic sealing element (10).

2. Method according to claim 1,
**characterized in that**
the through-opening (16) is generated in the sealing element (10) having a first equivalent diameter and the thus generated through-opening is expanded to a second equivalent diameter (18).

3. Method according to claim 2,
**characterized in that**
the through-opening (16) with the first equivalent diameter is generated by piercing the sealing element (10) with a piercing needle (20); and/or
the through-opening (16) with the first equivalent diameter is expanded to the second equivalent diameter by inserting a hollow needle (30) through the through-opening (16) generated with the first equivalent diameter.

4. Method according to claim 3,
**characterized in that**
the electrical conductor (40) is inserted into the through-opening (18) expanded to the second equivalent diameter by inserting the electrical conductor (40) into the hollow needle (30) and then the hollow needle (30) is withdrawn from the sealing element (10) so that the electrical conductor (40) remains in the through-opening, self-contracting due to the elasticity of the sealing element (10).

5. Method according to claim 3 or 4,
**characterized in that**
the contraction of the through-opening (18) expanded to the second equivalent diameter is effected by withdrawing the hollow needle (30) from the sealing element (10).

6. Method according to at least one of claims 3 to 5,
**characterized in that**
the hollow needle (30) is passed through the through-opening (16) generated with a first equivalent diameter, by sliding the hollow needle (30) onto the piercing needle (20) located in the sealing element (10).

7. Method according to claim 6,
**characterized in that**
the piercing needle (20) is withdrawn from the hollow needle (30) after the hollow needle (30) has been slid onto the piercing needle (20) located in the sealing element (10).

8. Method according to at least one of claims 4 to 7,
**characterized in that**
the electrical conductor (40) is inserted into the hollow needle (30) either after the piercing needle (20) has been withdrawn from the hollow needle (30) or during the piercing needle (20) is withdrawn from the hollow needle (30).

9. Method according to claim 7 or 8,
**characterized in that**
the electrical conductor (40) is inserted into the hollow needle (30) in the same direction in which the piercing needle (20) is withdrawn from the hollow needle (30).

10. Method according to claim 7 or 8,
**characterized in that**
the electrical conductor (40) is inserted into the hollow needle (30) in the same direction in which the piercing needle (20) is inserted into the hollow needle (30).

11. Method according to at least one of the preceding claims,
**characterized in that**
the generation of the through-opening (16) is carried out in a non-chipping way and/or the expansion of the generated through-opening (16) is carried out in a non-chipping way.

12. Method according to at least one of claims 3 to 11,
**characterized in that**
the generation of the through-opening (16) with the first equivalent diameter and the expansion of the generated through-opening (16) with a first equivalent diameter to a second equivalent diameter is performed in a common step by piercing the piercing needle (20) together with the hollow needle (30) slid-onto the same into the sealing element (10).

13. Method according to at least one of claims 3 to 12,
**characterized in that**
the hollow needle (30) has a frustoconical tip (32) which is tapered from a diameter (16) at the needle shaft (34) corresponding to the second equivalent diameter to a diameter (16) at the needle tip corresponding to the first equivalent diameter.

14. Method according to at least one of claims 2 to 13,
**characterized in that**
the first equivalent diameter is selected smaller than the outer diameter of the electrical conductor (40) and the second equivalent diameter greater than the outer diameter of the electrical conductor (40).

15. Electrical conductor covered with an electrical sealing element having a diameter of preferably not exceeding 1 mm, obtainable by a method according to at least one of the preceding claims.

## Revendications

1. Procédé pour enrober un conducteur électrique (40) avec un élément d'étanchéité élastique (10), comprenant les étapes consistant à
- préparer un élément d'étanchéité (10) ; et
- engendrer une perforation (16) dans l'élément d'étanchéité (10) ;
**caractérisé par**
- élargir la perforation engendrée (16) ;
- introduire le conducteur électrique (40) dans la perforation élargie (18) ; et
- provoquer une contraction de la perforation élargie (18) pour étancher le conducteur électrique (40) par rapport à l'élément d'étanchéité élastique (10).

2. Procédé selon la revendication 1,
**caractérisé en ce que** la perforation (16) dans l'élément d'étanchéité (10) est engendrée avec un premier diamètre équivalent, et la perforation ainsi engendrée est élargie à un second diamètre équivalent (18).

3. Procédé selon la revendication 2,
**caractérisé en ce que**
la perforation (16) avec le premier diamètre équivalent est engendrée en perforant l'élément d'étanchéité (10) avec une aiguille de poinçonnage (20) ; et/ou
**en ce que** la perforation (16) avec le premier diamètre équivalent est élargie au second diamètre équivalent en passant une aiguille creuse (30) à travers la perforation (16) engendrée avec le premier diamètre équivalent.

4. Procédé selon la revendication 3,
**caractérisé en ce que** le conducteur électrique (40) est introduit dans la perforation (18) élargie avec le second diamètre équivalent, en introduisant le conducteur électrique (40) dans l'aiguille creuse (30) est l'aiguille creuse (30) est ensuite extraite hors de l'élément d'étanchéité (10), de sorte que le conducteur électrique (40) demeure dans la perforation qui se contracte alors d'elle-même en raison de l'élasticité de l'élément d'étanchéité (10).

5. Procédé selon la revendication 3 ou 4,
**caractérisé en ce que** la contraction de la perforation (18) élargie au second diamètre équivalent est provoquée en extrayant l'aiguille creuse (30) hors de l'élément d'étanchéité (10).

6. Procédé selon l'une au moins des revendications 3 à 5,
**caractérisé en ce que** l'aiguille creuse (30) est passée à travers la perforation (16) engendrée avec un premier diamètre équivalent, en enfilant l'aiguille creuse (30) par-dessus l'aiguille de poinçonnage (20) qui se trouve dans le corps d'étanchéité (10).

7. Procédé selon la revendication 6,
**caractérisé en ce que** l'aiguille de poinçonnage (20) est tirée hors de l'aiguille creuse (30) après avoir enfilé l'aiguille creuse (30) par-dessus l'aiguille de poinçonnage (20) qui se trouve dans le corps d'étanchéité (10).

8. Procédé selon l'une au moins des revendications 4 à 7,
**caractérisé en ce que** le conducteur électrique (40) est introduit dans l'aiguille creuse (30), soit après que l'aiguille de poinçonnage (20) a été tirée hors de l'aiguille creuse (30), soit pendant que l'aiguille de poinçonnage (20) est tirée hors de l'aiguille creuse (30).

9. Procédé selon la revendication 7 ou 8,
**caractérisé en ce que** le conducteur électrique (40) est introduit dans l'aiguille creuse (30) dans la même direction dans laquelle l'aiguille de poinçonnage (20) est tirée hors de l'aiguille creuse (30).

10. Procédé selon la revendication 7 ou 8,
**caractérisé en ce que** le conducteur électrique (40) est introduit dans l'aiguille creuse (30) dans la même direction dans laquelle l'aiguille de poinçonnage (20) est introduite dans l'aiguille creuse (30).

11. Procédé selon l'une au moins des revendications précédentes,
**caractérisé en ce que** la réalisation de la perforation (16) a lieu sans enlèvement de matière et/ou **en ce que** l'élargissement de la perforation engendrée (16) a lieu sans enlèvement de matière.

12. Procédé selon l'une au moins des revendications 3 à 11,
**caractérisé en ce que** la réalisation de la perforation (16) avec un premier diamètre équivalent et l'élargissement de la perforation (16) engendré avec un premier diamètre équivalent jusqu'à un second diamètre équivalent ont lieu dans une étape commune, dans laquelle l'aiguille de poinçonnage (20) est enfoncée dans l'élément d'étanchéité (10) conjointement avec l'aiguille creuse (30) enfilée sur elle-même.

13. Procédé selon l'une au moins des revendications 3 à 12,
**caractérisé en ce que** l'aiguille creuse (30) comprend une pointe en forme de tronc de cône (32), qui va en se rétrécissant depuis un diamètre (16), correspondant aux second diamètre équivalent, sur la tige de l'aiguille (34), jusqu'à un diamètre (16), correspondant au premier diamètre équivalent, sur la pointe de l'aiguille.

14. Procédé selon l'une au moins des revendications 2 à 13,
**caractérisé en ce que** le premier diamètre équivalent est choisi plus petit que le diamètre extérieur du conducteur électrique (40), et le second diamètre équivalent est choisi plus grand que le diamètre extérieur du conducteur électrique (40).

15. Conducteur électrique enrobé avec un élément d'étanchéité électrique présentant un diamètre de préférence au maximum de 1 mm, obtenu selon un procédé d'après l'une au moins des revendications précédentes.
